# EUROPÄISCHE PATENTSCHRIFT

(11) **EP 0 631 940 B1**
(45) Veröffentlichungstag und Bekanntmachung des Hinweises auf die Patenterteilung: **24.04.1996**
(21) Anmeldenummer: 94110151.1
(22) Anmeldetag: 29.06.1994
(51) Int. Cl.: B65D 21/02

(54) **Mehrwegfähiges Transport- und Packungssystem mit einem stapelbaren Kasten für ineinandersteckbare Behälter**
Reusable transport and containerizing system comprising a stackable crate for stacking containers
Dispositif de transport et conditionnement comprenant une caisse empilable pour récipients superposables

(30) Priorität: 30.06.1993 DE 4321643
(43) Veröffentlichungstag der Anmeldung: 04.01.1995
(73) Patentinhaber: Gawlik, Gabriel, D-48143 Münster (DE)
(72) Erfinder: Gawlik, Gabriel, D-48143 Münster (DE)
(74) Vertreter: Schulze Horn, Stefan, Dipl.-Ing. M.Sc.

(56) Entgegenhaltungen:
- EP-A- 0 246 161
- US-A- 3 684 123
- US-A- 4 342 388

## Beschreibung

Die vorliegende Erfindung betrifft ein mehrwegfähiges Transport- und Packungssystem mit einem Kasten für Behälter für fließ-, riesel- oder schüttfähiges oder pastöses Gut, wobei das Gut flüssig oder pastös ist oder aus rieselfähigen Partikeln besteht. Derartige Systeme sind aus der praktischen Anwendung bekannt. So werden Flaschen oder Dosen, die gleiche Abmessungen aufweisen, in Tragekästen angeordnet. Die Tragekästen weisen entweder einen mittigen Griff oder seitige Grifflöcher auf. Auch weisen bekannte Kästen Zwischenwände auf und sind stapelbar.

Ein Nachteil des bekannten Transport- und Packungssystems für Behälter für fließ- oder schüttfähiges Gut, z.B. Getränke, ist, daß Behälter unterschiedlicher Größe gar nicht oder unter Inkaufnahme von unnötigem Leerraum in derartigen Kästen aufbewahrt, transportiert oder gepackt werden können.

Aus der FR-A-2 248 982 sind Behälter bekannt mit einem kreisrunden, bei allen Behältern gleich dimensionierten Querschnitt mit einem bestimmten Durchmesser, wobei die Behälter oben einen gleich dimensionierten, zentrisch angeordneten Hals mit einer runden, durch einen Deckel verschließbaren Öffnung aufweisen, wobei der Hals einen Innendurchmesser aufweist, der kleiner ist als der Behälterdurchmesser, wobei der Deckel an seiner Außenseite zentrisch eine etwa kreisrunde Einsenkung aufweist, deren Durchmesser etwa gleich dem Innendurchmesser des Halses ist, die Behälter unten einen gleich dimensionierten Boden aufweisen, der einen zentrisch angeordneten, etwa kreisrunden, nach unten ragenden Vorsprung aufweist, dessen Außendurchmesser ein wenig kleiner ist, als der Innendurchmesser des Halses, so daß der Vorsprung bei aufeinandergestapelten Behältern in die Einsenkung des Deckels oder in den Hals des darunter befindlichen Behälters einsetzbar ist.

Nachteilig gibt die technische Lehre nach FR-A-2 248 982 keine Lösung an, wie die aufeinander stapelbaren Behälter in einem Kasten raumsparend und gesichert unterbringbar sind.

Es ist die Aufgabe der vorliegenden Erfindung, ein mehrwegfähiges Transport- und Packungssystem mit einem Kasten für Behälter für fließ- oder schüttfähiges Gut zu schaffen, in dem Behälter unterschiedlicher Größe, d.h. unterschiedlichen Fassungsvermögens, raumsparend und kompakt in einem Kasten unterbringbar sind, wobei die unterschiedlichen Behälter gegen Kippen oder Umfallen gesichert sind.

Die Lösung der Aufgabe erfolgt bei einem mehrwegfähigen Transport- und Packungssystem mit den Merkmalen des Patentanspruches 1.

Dadurch, daß die Behälter ein unterschiedliches Fassungsvermögen V1, V2, V3 aufweisen, wobei drei Behältergrößen vorgesehen sind, deren Fassungsvermögen V1, V2, V3 zueinander im Verhältnis 4 : 2 : 1 stehen, und daß die Seitenwände und Zwischenwände des Kastens eine Höhe etwa gleich der Höhe H des Behälters mit dem Fassungsvermögen V1 aufweisen, wird ein Transport- und Packungssystem für Behälter geschaffen, in dem Behälter unterschiedlichen Fassungsvermögens kompakt und sicher aufeinander in einem Kasten unterbringbar sind, wobei gefüllte und ungefüllte Kästen problemlos aufeinander stapelbar sind, weil nach einer Weiterbildung am Kasten etwa mittig an der Oberkante der Zwischenwände ein Tragegriff angeordnet ist und am Kasten etwa mittig im Boden eine Eintiefung vorgesehen ist, die so dimensioniert und positioniert ist, daß sie bei Stapelung von zwei Kästen aufeinander den Tragegriff des unteren Kastens aufnimmt.

Ein weiterer Vorteil liegt darin, daß Behälter in nur teilweise gefüllten Kästen gegen Umfallen gesichert sind.

Außerdem ist es vorteilhaft, daß in einem weiten Bereich unterschiedliche Behälter in einem Kasten unterbringbar sind, wobei die Behälter mit der oberen Kante des Halses etwa mit der Oberkante des Kastens abschließen.

Zweckmäßig ist vorgesehen, daß der Kasten an seinem Boden eine mittig in dessen Längsrichtung durchgehende Sicke aufweist, deren Breite 14 bei 16 cm beträgt. Dadurch ist der Kasten rutschsicher auf einem bekannten Fahrradgepäckträger transportierbar.

Aus praktischen Gründen weist das quadratische Raster des Kastens zwei nebeneinander angeordnete Reihen von jeweils drei Rasterfeldern auf.

Vorteilhaft ist vorgesehen, daß die Behälter einstückig aus Glas oder aus Kunststoff oder aus Metall gefertigt sind.

Zweckmäßig ist der Kasten einstückig aus Kunststoff gefertigt.

Mit den Behältern sind Deckel auch in anderen Formen verwendbar, wenn auf die Stapelbarkeit der Behälter verzichtet wird. Da letztere nur beim Transport von Bedeutung ist, können beim Gebrauch des Behälters vorrätig gehaltene, als solche bekannte Deckel verwendet werden, die für flüssige Güter eine Tülle aufweien, für rieselfähige Güter eine Vielzahl von Öffnungen, oder für pastöse Güter einen gebogenen Hals und eine daneben angeordnete einfache Kolbenpumpe, die durch Niederdrücken eines Kolbens betätigbar ist. Die Dichtung des Deckels kann bedarfsweise ausgewechselt werden.

Die Behälter sind mit auswählbaren Farben bezüglich ihres Inhalts kennzeichenbar.

Eine bevorzugte Ausgestaltung der Erfindung wird nachfolgend anhand einer Zeichnung näher erläutert. Sie zeigt in
- Figur 1: schematisch die teilweise geschnittene Seitenansicht eines Behälters mit quadratischem Querschnitt mit dem größten Fassungsvermögen des erfindungsgemäßen Transport- und Packungssystems, in
- Figur 2: die teilweise geschnittene Seitenansicht eines Behälters ähnlich Figur 1 mit rundem Querschnitt und Deckel, in
- Figur 3: die Draufsicht auf einen mit unterschiedlichen Behältern gefüllten Kasten, und in
- Figur 4: einen Schnitt entlang der Linie III - III in Figur 3.

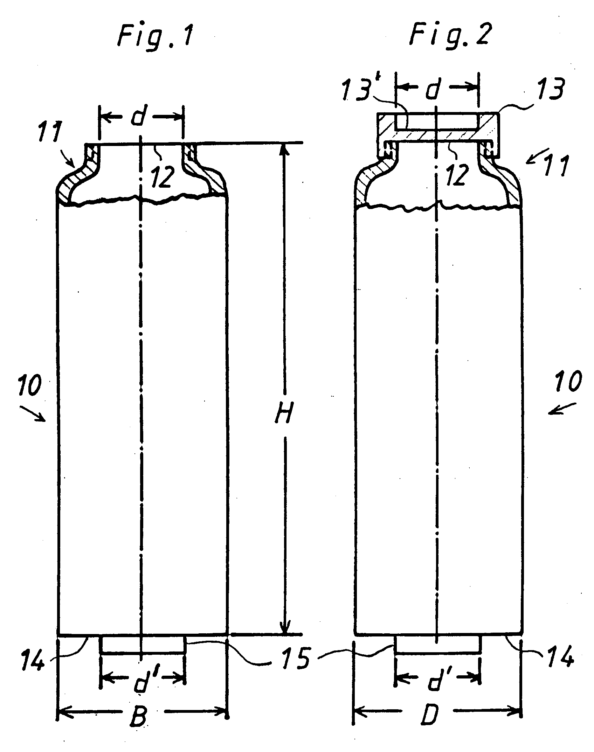

Mit Bezugnahme auf Figur 1 weist ein Behälter 10 einen allgemein rechteckigen Querschnitt mit der Kantenlänge B auf. Der Behälter 10 hat an seiner oberen Seite einen Hals 11 mit einer Öffnung 12, wobei der Querschnitt der Öffnung rund mit einem Innendurchmesser d ist. Auf den ein Außengewinde aufweisenden Hals 11 kann in bekannter Weise ein in Figur 2 gezeigter Deckel 13 aufgeschraubt werden.

Der Behälter 10 weist einen Boden 14 auf, der einen zentrisch angeordneten runden Vorsprung 15 besitzt mit einem Durchmesser d', der etwas kleiner ist als d, so daß der Vorsprung 15 in den Hals 11 eines darunter gestapelten weiteren Behälters einsteckbar ist und die Behälter fest aufeinander aufsitzen. Der Durchmesser d' des Vorsprungs 15 ist aus Stabilitätsgründen möglichst groß, jedoch kleiner als der Außendurchmesser des Behälters.

Der Behälter 10 weist eine Gesamthöhe von H auf.

Figur 2 zeigt den Behälter 10 in einer Ausführung mit rundem Querschnitt, wobei der Außendurchmesser D ist. Die Ausführung in Figur 2 zeigt den Deckel 13 im Querschnitt, so daß eine runde Eintiefung 13' vom Innendurchmesser d gleich dem Innendurchmesser des Halses 11 erkennbar ist, die bei Stapelung von mit Deckeln 13 verschlossenen Behältern den Vorsprung 15 eines darüber gestapelten Behälters aufnimmt.

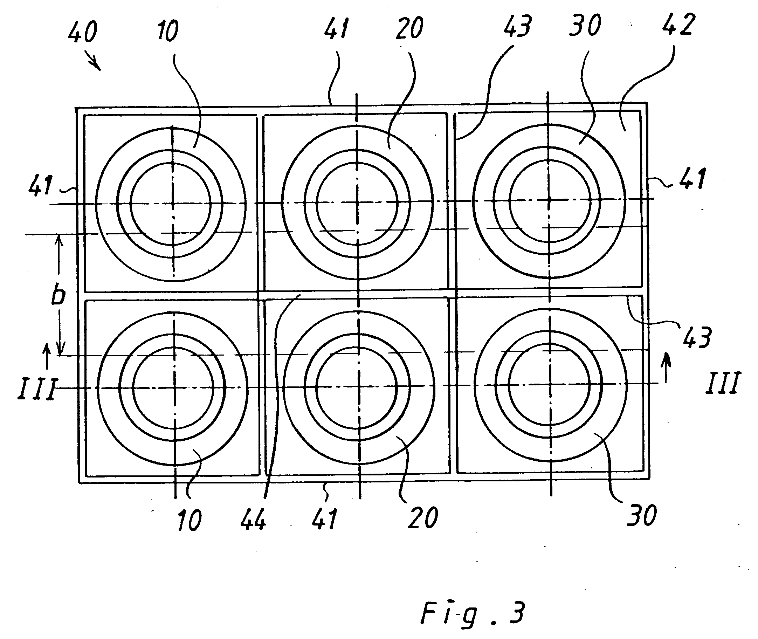

Figur 3 zeigt in Draufsicht einen Kasten 40, der vier Seitenwände 41 und einen Boden 42 aufweist. Die Seitenwände 41 bestehen jeweils aus aufragenden Streben und aus Querstreben am freien Ende der Streben, so daß der Zwischenraum zwischen den Streben eine visuelle Kontrolle der Behälter ermöglicht, wobei die Stege jeweils so angeordnet sind, daß sie die Behälter im Kasten halten, ohne sie zu verdecken.

In Längsrichtung der Mitte des rechteckigen Bodens 42 verläuft eine Zwischenwand 43, die die gleiche Höhe wie die Seitenwände 41 hat.

In der Mitte der Oberkante der Zwischenwand 43 ist ein Tragegriff 44 angebracht.

In Querrichtung des rechteckigen Bodens 42 sind zwei weitere Zwischenwände 43 angeordnet, die gleichmäßig beabstandet derart verlaufen, daß der Boden 42 durch die Zwischenwände 43 zusammen mit den Seitenwänden 41 in sechs quadratische Rasterfelder aufgeteilt ist, und zwar in zwei Reihen zu jeweils drei Rasterfeldern. Jedes Rasterfeld nimmt z.B. einen Behälter 10 oder zwei aufeinandergestapelte Behälter 20 oder vier aufeinandergestapelte Behälter 30 auf, wobei die Fassungsvermögen der Behälter 10, 20, 30 sich wie 4 : 2 : 1 verhalten.

In Figur 3 sind die Behälter 10 links, die Behälter 20 mittig und die Behälter 30 rechts angeordnet.

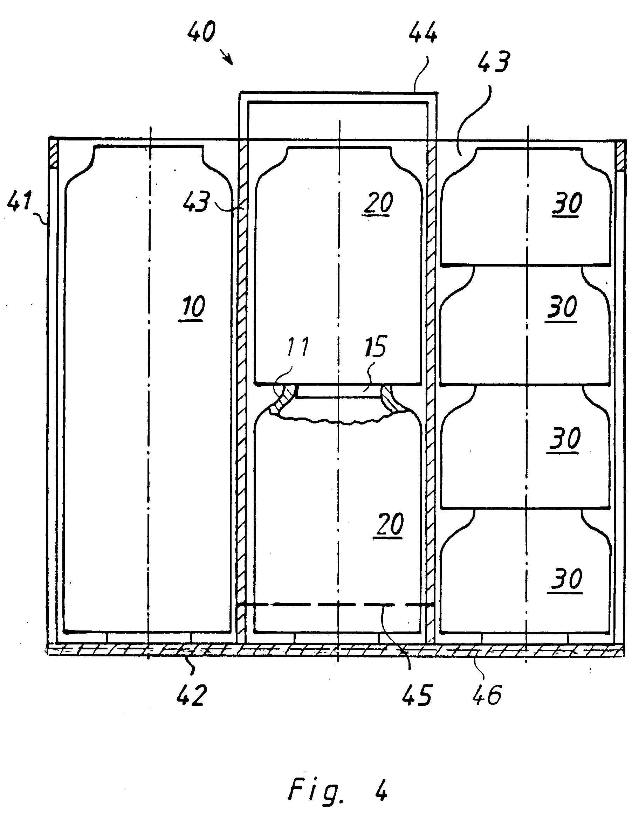

Gestrichelt ist der Verlauf einer Sicke 46 (siehe dazu Figur 4) angedeutet, wobei die Breite der Sicke b ist.

Figur 4 zeigt im Schnitt den Kasten 40, wobei die Querstreben der Seitenwände 41 im Schnitt sichtbar sind. Boden 42 und Zwischenwände 43 sind vollflächig. Der Handgriff 44 ist erkennbar.

Der Boden 42 weist eine Eintiefung 45 auf, die so dimensioniert ist, daß bei aufeinandergestapelten Kästen 40 der Handgriff 44 des unteren Kastens in die Eintiefung 45 des oberen Kastens ragt und die beiden Kästen stabil aufeinander sitzen.

In Figur 4 ist die Stapelung der Behälter 10, 20 und 30 dargestellt, wobei die Behälter ohne Deckel gezeigt sind.

Bei den beiden mittleren Behältern 20 ist im Teilschnitt dargestellt, wie der Vorsprung 15 im Boden des oberen Behälters 20 im Hals 11 des unteren Behälters 20 steckt und somit die Behälter fest aufeinander sitzen.

Die Stapelung der rechten vier Behälter 30 ist die gleiche wie bei den beiden Behältern 20.

## Patentansprüche

1. Mehrwegfähiges Transport- und Packungssystem mit einem Kasten (40) und Behältern für fließ-, riesel- oder schüttfähiges oder pastöses Gut, wobei die Behälter (10, 20, 30) einen allgemein quadratischen oder etwa kreisrunden Querschnitt mit einer Kantenlänge B bzw. einem Durchmesser D und oben einen zentrisch angeordneten Hals (11) mit einer runden, durch einen aufschraubbaren Deckel (13) verschließbaren Öffnung (12) aufweisen, wobei der Hals einen Innendurchmesser d aufweist, wobei d kleiner ist als B bzw. D, und der aufschraubbare Deckel (13) an seiner Außenseite zentrisch eine etwa kreisrunde Einsenkung (13') aufweist, deren Durchmesser etwa gleich dem Innendurchmesser d des Halses (11) ist, und die Behälter (10, 20, 30) unten einen Boden (14) aufweisen, der einen zentrisch angeordneten, etwa kreisrunden, nach unten ragenden Vorsprung (15) aufweist, dessen Außendurchmesser d' ein wenig kleiner ist, als der Innendurchmesser d des Halses (11), so daß der Vorsprung (15) bei aufeinandergestapelten Behältern in die Einsenkung (13') des Deckels (13) oder in den Hals (11) des darunter befindlichen Behälters (10, 20, 30) einsetzbar ist und der Kasten (40) oben offen und stapelbar mit allgemein rechteckigem Querschnitt zur Aufnahme einer Vielzahl von Behältern (10, 20, 30) ist und aus aufragenden Stegen mit oben angeordneten Verbindungsstegen gebildete Seitenwände (41) und ein quadratisches Raster aus mit einem Abstand etwas größer als B bzw. D senkrecht vom Boden (42) des Kastens (40) aufragenden Zwischenwänden (43) aufweist, wobei bei Stapelung von zwei Kästen (40) aufeinander der Boden (42) des oberen Kastens (40) auf den Oberkanten der Zwischenwände (43) und der Seitenwände (41) des unteren Kastens (30) aufsitzt, und wobei die in dem Kasten (40) aufgenommenen Behälter (10, 20, 30) ein unterschiedliches Fassungsvermögen V1, V2, V3 bei gleich dimensioniertem Querschnitt des Behälters, des Halses und des Bodens aufweisen, wobei drei Behältergrößen vorgesehen sind, deren Fassungsvermögen V1, V2, V3 zueinander im Verhältnis 4 : 2 : 1 stehen, und die Seitenwände (41) und Zwischenwände (43) des Kastens (40) eine Höhe etwa gleich der Höhe H des Behälters (10) mit dem Fassungsvermögen V1 aufweisen.

2. Transport- und Packungssystem nach Anspruch 1, bei dem am Kasten (40) etwa mittig an der Oberkante der Zwischenwände (43) ein Tragegriff (44) angeordnet ist und am Kasten (40) etwa mittig im Boden (42) eine Eintiefung (45) vorgesehen ist, die so dimensioniert und positioniert ist, daß sie bei Stapelung von zwei Kästen (40) aufeinander den Tragegriff (44) des unteren Kastens (40) aufnimmt.

3. Transport- und Packungssystem nach Anspruch 1 oder 2, bei dem der Kasten (40) an seinem Boden (42) eine mittig in dessen Längsrichtung durchgehende Sicke (46) aufweist, deren Breite b 14 bis 16 cm beträgt.

4. Transport- und Packungssystem nach Anspruch 1 bis 3, bei dem das quadratische Raster zwei nebeneinander angeordnete Reihen von jeweils drei Rasterfeldern aufweist.

5. Transport- und Packungssystem nach Anspruch 1 bis 4, bei dem die Behälter (10, 20, 30) einstückig aus Glas oder aus Kunststoff oder aus Metall gefertigt sind.

6. Transport- und Packungssystem nach einem der Ansprüche 1 bis 5, bei dem der Kasten (40) einstückig aus Kunststoff gefertigt ist.

## Claims

1. Reusable transport and packaging system with a crate (40) and containers for liquid, powdery, granulated or paste-like substances, whereby the containers (10, 20, 30) are of generally square or approximately circular cross-section with a side length B or diameter D and have at the top a centrically located neck (11) with a round opening (12) which can be closed by a screw lid (13), whereby the neck has an inside diameter d, whereby d is smaller than B or D, and the screw lid (13) is provided on its outside with a centrically located and approximately circular depression (13') whose diameter is approximately equivalent to the inside diameter d of the neck (13), and the containers (10, 20, 30) have a base (14) which is provided with a centrically located and approximately circular projection (15) pointing downwards whose outside diameter d' is slightly smaller than the inside diameter d of the neck (11) so that when containers are stacked on top of one another the projection (15) fits into the depression (13') of the lid (13) or into the neck (11) of the container (10, 20, 30) below, and the crate (40) is open at the top and stackable and with a generally rectangular cross-section to hold a large number of containers (10, 20, 30) and has side walls (41) formed from uprights with connecting crosspieces at the top and a grid of square fields formed by partition walls (43) rising vertically from the base (42) of the crate (40) at distances slightly greater than B or D, whereby when two crates (40) are stacked on top of one another the base (42) of the upper crate (40) rests on the top edges of the partition walls (43) and the side walls (41) of the lower crate (40), and whereby the containers (10, 20, 30) placed in the crate (40) are of different capacities V1, V2, V3 but with the cross-sections of the containers (10, 20, 30), necks (11) and bases (42) being of the same dimensions, whereby three container sizes are intended whose capacities V1, V2, V3 are in a ratio to each other of 4 : 2 : 1, and the side walls (41) and partition walls (43) of the crate (40) have a height approximately equivalent to the height H of the container (10) with capacity V1.

2. Transport and packaging system as per claim 1, in which a handle (44) is located approximately centrally at the top edge of the partition walls (43) of the crate (40) and a depression (45) is provided approximately centrally in the base (42) of the crate (40), the depression (45) being so dimensioned and positioned that when two crates (40) are stacked on top of one another the handle (44) of the lower crate (40) fits into it.

3. Transport and packaging system as per claim 1 or 2, in which the base (42) of the crate (40) is provided with a depression (46) which has a breadth b of 14 to 16 cm, is located centrally and extends right across the base at right angles to the longitudinal axis.

4. Transport and packaging system as per claim 1 to 3, in which the grid of square fields has two rows of three fields each arranged side by side.

5. Transport and packaging system as per claim 1 to 4, in which the containers (10, 20, 30) are made in one piece out of glass or plastic or metal.

6. Transport and packaging system as per one of the claims 1 to 5, in which the crate (40) is made in one piece out of plastic.

## Revendications

1. Système de transport et d'emballage à utilisations renouvelables avec une boîte (40) et des récipients pour des marchandises liquides, ruisselantes, en vrac ou visqueuses alors que les récipients (10, 20, 30) présentent une coupe carrée ou ronde avec une longueur d'arête B respectivement avec un diamètre D et en haut un goulot (11) placé au centre avec une ouverture ouvrable ou fermable grâce à un couvercle (13) que l'on peut visser présente sur le côté extérieur une fente de forme ronde (13') dont le diamètre est environ le même que le diamètre intérieur (11) du goulot et les boîtes (10, 20, 30) ont un fond (14) qui présente un rebord qui fait saillie vers le bas et qui est central et de forme ronde dont le diamètre extérieur d' est un peu plus petit que le diamètre intérieur du goulot (11), de telle sorte que le rebord (15) avec des récipients empilés les uns sur les autres est enfilable dans le creux (13') du couvercle (13) ou dans le goulot (11) du récipient suité en-dessous (10, 20, 30) et la boîte (40) ouverte au-dessus et empilable avec une coupe rectangulaire pour pouvoir contenir un certain nombre de récipients (10, 20, 30) et avec des parois formées avec des appuis et une trame rectangulaire avec une distance plus grande que B, même que D perpendiculaire au fond (42) de la boîte supérieure (40) avec des cloisons qui se dressent tandis qu' en empilant (2) boîtes (40) l'une sur l'autre le fond (42) de la boîte supérieure (40) sur les arêtes supérieures des cloisons (43) et des parois latérales de la boîte inférieure (40) et tandis que les récipients (10, 20, 30), contenus dans la boîte (40), présentent une capacité V1, V2, V3 pour une coupe du récipient (10, 20, 30), de même dimension, du goulot (11) et du fond (42), alors que (3) grandeurs de récipients sont prévues, dont la capacité V1, V2, V3 ayant un rapport entre eux de 4 : 2 : 1 et les parois latérales (41) ainsi que les cloisons (43) de la boîte (40), présentent une hauteur semblable à celle de H de la boîte (10) d'une capacité V1.

2. Système de transport et d'emballage d'après les revendications 1, sur la boîte (40), environ au milieu sur l'arête supérieure des cloisons (43), se trouve une poignée (44) et sur la boîte (40) environ au milieu du fond (42), un creux est prévu, de dimension et position telles que l'empilage de deux boîtes (40) l'une sur l'autre, ce creux recoive la poignée de la boîte inférieure (40).

3. Système de transport et d'emballage d'après les revendications 1 et 2 où la boîte (40) présente sur le fond dans le sens transversal et au milieu, une bande de renforcement (46) dont la largeur b est de 14 à 16 cm.

4. Système de transport et d'emballage d'après les revendications 1 à 3 où le quadrillage présente (2) rangées l'une à côte de l'autre de chacune 3 panneaux quadrillés.

5. Système de transport et d'emballage d'après les revendications 1 à 4 où les récipients (10, 20, 30) sont faits d'une pièce: en verre, en plastique ou en métal.

6. Système de transport et d'emballage d'après les revendications 1 à 5 où la boîte (40) est faite tout en plastique.
